# EUROPÄISCHE PATENTANMELDUNG

(11) **EP 1 041 098 A2**
(43) Veröffentlichungstag der Anmeldung: **04.10.2000**
(21) Anmeldenummer: 00104065.8
(22) Anmeldetag: 28.02.2000
(51) Int. Cl.: C08G 18/48, C08G 18/10

(54) **Verfahren zur Herstellung von Polyurethanen**

(30) Priorität: 27.03.1999 DE 19914076
(71) Anmelder: BASF AKTIENGESELLSCHAFT, 67056 Ludwigshafen (DE)
(72) Erfinder: Volkert, Otto Dr., 67273 Weisenheim (DE); Kreyenschmidt, Martin Dr., 67551 Worms (DE); Merz, Rüdiger, 67316 Carlsberg (DE); Pietruschka, Raimund, 67280 Ebertsheim (DE)

(57) **Zusammenfassung**

Gegenstand der Erfindung ist ein Verfahren zur Herstellung von kompakten oder zelligen Polyurethanen durch Umsetzung von
a) mindestens einer Verbindung mit mindestens zwei aktiven Wasserstoffatomen mit
b) mindestens einem Polyisocyanat,
   in Anwesenheit von
c) Katalysatoren und gegebenenfalls
d) Treibmitteln sowie
e) Hilfs- und/oder Zusatzstoffen,
dadurch gekennzeichnet, daß als Komponente a) mindestens ein Polyoxypropylen-Polyol eingesetzt wird, dessen sekundäre Hydroxylgruppen über ein Bindeglied der allgemeinen Formel X₁-R-X₂, wobei X₁ und X₂ gleich oder verschieden und mit Hydroxylgruppen reaktive funktionelle Gruppen sind und R ein beliebiger aliphatischer, cycloaliphatischer oder aromatischer Rest ist, mit Diolen, die nur primäre Hydroxylgruppen aufweisen, verbunden sind.

## Beschreibung

Gegenstand der Erfindung ist ein Verfahren zur Herstellung von Polyurethanen durch Umsetzung von Isocyanaten mit Verbindungen mit mindestens zwei aktiven Wasserstoffatomen, wobei als Verbindungen mit mindestens zwei aktiven Wasserstoffatomen zwei- oder dreifunktionelle Polyoxypropylenpolyole verwendet werden, deren endständige sekundäre Hydroxylgruppen über zweiwertige Bindeglieder mit Diolen mit ausschließlich primären Hydroxylgruppen umgesetzt sind.

Die Herstellung von Polyurethanen, z. B. Formkörpern mit einer verdichteten Randzone und einem zelligen Kern, auch als Integralschaumstoffe bezeichnet, durch Umsetzung von Isocyanaten mit Verbindungen mit mindestens zwei aktiven Wasserstoffatomen ist seit langem bekannt und vielfach in der Literatur beschrieben. Als Verbindungen mit mindestens zwei aktiven Wasserstoffatomen werden vielfach Polyetheralkohole eingesetzt. Diese werden üblicherweise hergestellt durch Anlagerung von Propylenoxid und/oder Ethylenoxid an H-funktionelle Startsubstanzen. Zur Herstellung von PU-Integralschaumstoffen werden überwiegend Polyetherole eingesetzt, die durch Anlagerung von Propylenoxid an 2- oder 3-funktionelle alkoholische Startsubstanzen hergestellt werden. Das Molekulargewicht dieser Polyetherole sollte über 1000 liegen. Da reine Propylenoxid-Addukte nur sekundäre Hydroxylgruppen im Molekül enthalten, ist ihre Reaktivität gegenüber Polyisocyanaten meist nur gering. Daher wird häufig in einem zweiten Reaktionsschritt Ethylenoxid an das Kettenende angelagert. Dabei erhält man Polyetherole mit primären Hydroxylgruppen, die reaktiver sind. Derartige Polyetherole werden auch als "getippte Polyetherole" bezeichnet. Die getippten Polyetherole enthalten jedoch immer noch 10 bis 15 % sekundäre Hydroxylgruppen. Um überhaupt einen Gehalt an primären Hydroxylgruppen von 85 bis 90 % zu erreichen, ist es notwendig, bis zu 20 Gew.-% Ethylenoxid an das Polyol zu addieren. Ein so hoher Gehalt an Ethylenoxid im Polyol hat jedoch auch Nachteile. So nimmt die Hydrophilie der Polyole und damit auch der daraus hergestellten Polyurethane mit steigendem Ethylenoxidgehalt zu. Zum anderen werden die PU-Integralschaumstoffe mit steigendem Ethylenoxidgehalt härter, was für viele Anwendungen unerwünscht ist.

Um diesen Mangel zu beheben, wurde versucht, reine PropylenoxidAddukte mit primären Hydroxylgruppen zu erhalten, indem die Anlagerung des Propylenoxids an die Startsubstanz unter Verwendung saurer Katalysatoren, wie beispielsweise Bortrifluorid, durchgeführt wurde. Dieses Verfahren wird auch als kationische Polyaddition bezeichnet. Die kationische Polyaddition ist jedoch teuer, nur für die Herstellung niedermolekularer Polyetherole anwendbar, und der Gehalt an primären Hydroxylgruppen liegt ebenfalls nur bei durchschnittlich 80 %.

Aufgabe der Erfindung war es, ein Verfahren zur Herstellung von Polyurethanen zu entwickeln, bei dem als Polyolkomponente Polyetherole eingesetzt werden, die einen Anteil an primären Hydroxylgruppen, bezogen auf die Gesamtzahl der Hydroxylgruppen, von mindestens 95 % aufweisen, ohne daß eine Anlagerung von Ethylenoxid am Kettenende notwendig ist.

Die Aufgabe konnte überraschenderweise gelöst werden durch die Verwendung von 2- bis 3-funktionellen Polyoxypropylen-Polyole, deren endständige, sekundäre Hydroxylgruppen über zweiwertige Bindeglieder mit einem Diol mit ausschließlich primären Hydroxylgruppen umgesetzt sind.

Gegenstand der Erfindung ist demzufolge ein Verfahren zur Herstellung von kompakten oder zelligen Polyurethanen, insbesondere Polyurethanschaumstoffen mit einer verdichteten Randzone und einem zelligen Kern, durch Umsetzung von
a) mindestens einer Verbindung mit mindestens zwei aktiven Wasserstoffatomen mit
b) mindestens einem Polyisocyanat,
   in Anwesenheit von
c) Katalysatoren und gegebenenfalls
d) Treibmitteln sowie
e) Hilfs- und/oder Zusatzstoffen
dadurch gekennzeichnet, daß als Komponente a) mindestens ein Polyoxypropylen-Polyol eingesetzt wird, dessen sekundäre Hydroxylgruppen über ein Bindeglied der allgemeinen Formel X₁-R-X₂, wobei X₁ und X₂ gleich oder verschieden und mit Hydroxylgruppen reaktive funktionelle Gruppen sind und R ein beliebiger aliphatischer, cycloaliphatischer oder aromatischer Rest ist, mit Diolen, die nur primäre Hydroxylgruppen aufweisen, verbunden sind.

Gegenstand der Erfindung sind auch kompakte oder zellige Polyurethane, insbesondere Polyurethanschaumstoffe mit einer verdichteten Randzone und einem zelligen Kern, herstellbar nach dem beschriebenen Verfahren.

Gegenstand der Erfindung sind weiterhin Polyole, herstellbar durch Umsetzung von Polyoxypropylen-Polyolen mit Verbindungen mit zwei mit Hydroxylgruppen reaktiven Gruppen und anschließende Umsetzung dieser Zwischenprodukte mit Diolen, die nur primäre Hydroxylgruppen aufweisen.

Die zur Herstellung der erfindungsgemäßen Polyole eingesetzten Polyoxypropylen-Polyole sind zumeist 2- oder 3-funktionell. Ihre Herstellung erfolgt nach üblichen und bekannten Verfahren durch Anlagerung von Propylenoxid an Wasser oder 2- oder 3-wertige Alkohole, beispielsweise Ethylenglykol, Propandiol-1,2 und -1,3, Diethylenglykol, Dipropylenglykol, Butandiol-1,4, Glyzerin oder Trimethylolpropan. An Stelle von Propylenoxid kann natürlich auch Butylenoxid eingesetzt werden. Die Polyoxypropylen-Polyole besitzen eine Funktionalität von 2 bis 3 und Molekulargewichte von 1000 bis 8000, vorzugsweise von 2000 bis 6000. Weiterhin können als Polyoxypropylen-Polyole auch sogenannte Pfropfpolyole, auch als Graft-Polyole oder Polymerpolyole bezeichnet, eingesetzt werden. Diese werden zumeist durch in-situ-Polymerisation von ethylenisch ungesättigten Monomeren, vorzugsweise Styrol und/oder Acrylnitril, in den Polyoxypropylen-Polyolen hergestellt. Derartige Produkte sowie ihre Herstellung sind vielfach in der Literatur beschrieben.

Als Bindeglied mit der allgemeinen Formel X₁-R-X₂ werden Verbindungen mit zwei gegen Hydroxylgruppen reaktiven Gruppen eingesetzt. Die Bedeutung der Symbole wurden oben erläutert. Beispiele für X₁ und X₂ sind Carbonsäuregruppen und substituierte Carbonsäuregruppen, beispielsweise Säureanhydridgruppen, Säurehalogenidgruppen, insbesondere Säurechloridgruppen, Isocyanatgruppen oder Silangruppen. Zumeist sind X₁ und X₂ gleich.

Bei R handelt es sich um einen beliebigen aliphatischen, cycloaliphatischen oder aromatischen Rest, der die beiden funktionellen Gruppen X₁ und X₂ trägt. Beispiele für Verbindungen der allgemeinen Formel X₁-R-X₂ sind Carbonsäurechloride, wie Oxalsäuredichlorid, Bernsteinsäuredichlorid, Adipinsäuredichlorid, Phtalsäurechlorid, Silane, insbesondere Dialkylchlorsilane, Diioscyanate, wie 2,4- und 2,6-Toluylendiisocyanat, 1,6-Hexamethylen-diisocyanat, Isophorondiisocyanat, oder 2,4-Diphenylmethandiisocyanat.

Als Diole, die über das Bindeglied X₁-R-X₂ mit den Polyoxypropylen-Polyolen verbunden sind, kommen insbesondere lineare oder verzweigte Diole mit 2 bis 10 Kohlenstoffatomen in der Hauptkette zum Einsatz. Beispiele hierfür sind Ethylenglykol, Diethylenglykol, Triethylenglykol, Butandiol-1,4, Pentandiol-1,5, Hexandiol-1,6, Neopentylglykol, 2-Methyl-2-propyl-propandiol-1,3, 2-Methyl-2-butylpropandiol-1,3, 2-Methyl-2-phenylpropandiol-1,3, 2-Ethyl-2-butylpropandiol-1,3.

Es ist auch möglich, Verbindungen einzusetzen, die neben Hydroxylgruppen auch andere H-funktionelle Gruppen aufweisen, z.B. Mercapto- und insbesondere Aminogruppen, beispielsweise 1-Hydroxy-3-N-Methylaminopropan. Bei diesen Verbindungen ist es möglich, eine der Gruppen mit einer Schutzgruppe zu versehen, um die Selektivität der Reaktion zu erhöhen.

Die erfindungsgemäßen Polyole sind bei Raumtemperatur flüssig, mit den anderen Bestandteilen der Polyolkomponente gut mischbar und unempfindlich gegen Hydrolyse.

Die Herstellung der erfindungsgemäßen Polyole kann erfolgen, indem man die Polyoxypropylen-Polyole zunächst mit der Verbindung der allgemeinen Formel X₁-R-X₂ umsetzt, das Zwischenprodukt, das Endgruppen X₁ oder X₂ aufweist, isoliert und dieses Zwischenprodukt mit den Diolen umsetzt. Es ist jedoch auch möglich, zunächst das Diol mit der Verbindung der allgemeinen Formel X₁-R-X₂ umzusetzen und dieses Zwischenprodukt mit den Polyoxypropylen-Polyolen umzusetzen. Die Reaktionsbedingungen dieser Umsetzungen hängen von der Art der Gruppen X₁ und X₂ ab und sind für den Fachmann leicht zu ermitteln.

Neben den beschriebenen Polyolen kann die Komponente a) weitere mehrfunktionelle Polyole enthalten. Dies können zum einen langkettige Polyole, beispielsweise Polyetherole, Polyesterole, oder Polycarbonate mit einem Molekulargewicht im Bereich von 500 bis 8500, vorzugsweise 1000 bis 6000, insbesondere 1000 bis 4500 und einer Funktionalität im Bereich von 2 bis 4, vorzugsweise 2 bis 3.

Zur Komponente a) gehören auch die Kettenverlängerungs- und Vernetzungsmittel. Als Kettenverlängerungs- und Vernetzungsmittel werden vorzugsweise 2- und 3-funktionelle Alkohole mit Molekulargewichten unter 500, vorzugsweise kleiner 400, insbesondere im Bereich von 60 bis 150 eingesetzt. Beispiele sind Ethylenglykol, Propylenglykol, Diethylenglykol, Pentandiol-1,5, Hexandiol-1,6, Methylpropandiol und Butandiol-1,4, Glycerin, Trimethylolpropan sowie Umsetzungsprodukte der genannten Verbindungen mit niederen Alkylenoxiden, insbesondere Ethylenoxid und/oder Propylenoxid. Als Vernetzungsmittel können auch Diamine und Hydroxylamine eingesetzt werden, beispielsweise Diethanolamin, Triethanolamin, Diaminoethan oder Diaminopropan. Die Menge der Kettenverlängerungs- und Vernetzungsmittel beträgt insbesondere 4 bis 30 Gew.-%, vorzugsweise 5 bis 15 Gew.-%, bezogen auf das Gewicht der Komponenten a) und b).

Zu den übrigen Einsatzstoffen des erfindungsgemäßen Verfahrens ist im einzelnen folgendes zu sagen:

Als Polyisocyanate b) können die üblichen und bekannten (cyclo)aliphatischen und insbesondere aromatischen Polyisocyanate eingesetzt werden. Beispiele für (cyclo)aliphatische Polyisocyanate sind Hexamethylendiisocyanat-1,6 und Isophorondiisocyanat, Beispiele für aromatische Polyisocyanate sind 2,4- und 2,6-Toluylendiisocyanat, 4,4'-, 2,4'- und 2,2'-Diphenylmethandiisocyanat, 1,5-Naphtylendiisocyanat. Die genannten Isocyanate können auch modifiziert sein, beispielsweise durch Einbau von Carbodiimidgruppen. Häufig werden die Polyisocyanate auch in Form von Prepolymeren eingesetzt. Dabei handelt es sich um Umsetzungsprodukte der genannten Polyisocyanate mit Polyolkomponenten. Zumeist werden sogenannte Isocyanatprepolymere und -quasiprepolymere verwendet, das heißt solche Umsetzungsprodukte von Polyolen und Polyisocyanaten, die am Kettenende freie Isocyanatgruppen aufweisen. Die Prepolymeren und Quasiprepolymeren und ihre Herstellung sind allgemein bekannt und vielfach beschrieben. Für das erfindungsgemäße Verfahren werden insbesondere Prepolymere mit einem NCO-Gehalt im Bereich von 10 bis 24 Gew.-% oder Quasiprepolymere mit einem NCO-Gehalt im Bereich von 24 bis 29 Gew.-% verwendet. Als Polyole zur Herstellung der Prepolymere und Quasiprepolymere werden vorzugsweise Polyetherole, insbesondere 2- und 3-funktionelle Ethylenoxid- und/oder Propylenoxid-Anlagemungsprodukte mit Molekulargewichten von 1000 bis 8500, Polytetramethylenglykole mit Molekulargewichten von 500 bis 3000, Polyesterole mit Molekulargewichten im Bereich von 700 bis 3000 und eine Funktionalität von 2 bis 3, erhältlich durch bekannte Umsetzung von Polycarbonsäuren mit mehrfunktionellen Alkoholen, und/oder Polycarbonatdiole mit einem Molekulargewicht von 500 bis 1000 eingesetzt. Die Herstellung der Prepolymere und Quasiprepolymere kann in Anwesenheit oder Abwesenheit von üblichen und bekannten, auch als Komponente c) beschriebenen Urethanisierungskatalysatoren durchgeführt werden.

Als Katalysatoren c) für die Herstellung der erfindungsgemäßen Polyurethane werden die üblichen und bekannten Polyurethanbildungskatalysatoren eingesetzt, beispielsweise organische Zinnverbindungen, wie Zinndiacetat, Zinndioctoat, Dialkylzinndilaurat, und/oder stark basische Amine wie Triethylamin, Pentamethyldiethylentriamin, Tetramethyldiaminoethylether, 1,2-Dimethylimidazol oder vorzugsweise Trietyhlendiamin.

Als Treibmittel d) zur Herstellung der zelligen Polyurethane wird bevorzugt Wasser eingesetzt, das mit den Isocyanatgruppen unter Freisetzung von Kohlendioxid reagiert. Gemeinsam mit oder an Stelle von Wasser können auch physikalisch wirkende Treibmittel, beispielsweise Kohlenwassserstoffe, wie n-, iso- oder Cyclopentan, oder halogenierte Kohlenwasserstoffe, wie Tetrafluorethan, Pentafluorpropan, Heptafluorpropan, Pentafluorbutan, Hexafluorbutan oder Dichlor-monofluorethan, eingesetzt werden.

Als Hilfsmittel und/oder Zusatzstoffe e) werden beispielsweise oberflächenaktive Substanzen, Schaumstabilisatoren, Zellregler, äußere und innere Trennmittel, Füllstoffe, Pigmente, Flammschutzmittel, Hydrolyseschutzmittel sowie fungistatisch und bakteriostatisch wirkende Substanzen eingesetzt.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate b) mit den Verbindungen mit mindestens zwei aktiven Wasserstoffatomen im Beisein der Komponenten c) bis e) zur Reaktion gebracht. Hierbei werden die Komponenten b) bis e) häufig vor der Umsetzung zu einer sogenannten Polyolkomponente vereinigt und diese mit der Isocyanatkomponente zusammengebracht.

Bei der Herstellung der erfindungsgemäßen Polyurethane werden die Komponenten a) und b) in einer solchen Menge zusammengebracht, daß das Äquivalenzverhältnis von Isocyanatgruppen zur Summe der aktiven Wasserstoffatome 1:0,8 bis 1:1,25, vorzugsweise 1:0,9 bis 1:1,15 beträgt.

Der Hauptvorteil des erfindungsgemäßen Verfahrens besteht darin, daß als Verbindungen mit mindestens zwei aktiven Wasserstoffatomen a) solche eingesetzt werden, die einen sehr hohen Anteil an primären Hydroxylgruppen aufwiesen. Bisher wurde der notwendige Gehalt an primären Hydroxyxlgruppen durch Einbau von Ethylenoxid an das Kettenende der Polyetheralkohole erreicht. Dies hat jedoch den Nachteil, daß die Polarität des Polyetherols stark ansteigt, was zu einer Phasenseparation der Polyolkomponente und zu einer Verschlechterung der mechanischen Eigenschaften der resultierenden Polyurethane führt.

Die Erfindung soll an folgenden Beispielen näher erläutert werden.

### Beispiele 1 bis 4

### Herstellung der Polyetherole

### Beispiel 1

In einem 5-1-HWS-Gefäß wurden 2000 g eines Polyoxypropylenglykols mit einer Hydroxylzahl von 56 mgKOH/g vorgelegt und unter Spülung mit Stickstoff auf 60°C erwärmt. Danach wurden 313 g Toluylendiisocyanat (TDI) mit einem Isomerenverhältnis von 80% 2,4- und 20 % 2,6- TDI (TDI 80) zugegeben und die Mischung unter Rühren auf 80°C erwärmt. Nach einer Stunde wurden zur Vervollständigung der Umsetzung 2,5 mg Triethylendiamin zugegeben und das Gemisch für weitere 30 Minuten auf 80°C gehalten. Der NCO-Gehalt der Mischung betrug nach dieser Zeit 2,98%, was einer vollständigen Abreaktion der Hydroxylgruppen entspricht.

Zu diesem Reaktionsprodukt wurden 270 g Butandiol-1,4 gegeben und das Gemisch für weitere 30 Minuten auf 80°C gehalten. Nach dem Abkühlen der Reaktionsmischung erhielt man ein Polyol mit einer Viskosität von 5013 mPas bei 45°C, gemessen mit einem Viskosimeter Haake Rotovisco SV 20, und einer Hydroxylzahl von 94 mgKOH/g, was der theoretischen Hydroxylzahl entspricht.

### Beispiel 2

In der in Beispiel 1 beschriebenen Apparatur wurden 4000 g eines Polyoxypropylenglykols mit der Hydroxylzahl von 27 mgKOH/g vorgelegt und wie in Beispiel 1 beschrieben mit 313 g TDI 80 umgesetzt.

Der NCO-Gehalt der Mischung betrug nach der Umsetzung 1,72 %, was einer vollständigen Abreaktion der Hydroxylgruppen entspricht.

Diese Reaktionsmischung wurde wie in Beispiel 1 beschrieben mit 270 g Butandiol-1,4 umgesetzt. Nach dem Abkühlen der Reaktionsmischung erhielt man ein Polyol mit einer Viskosität von 4320 mPas bei 45°C, gemessen mit einem Viskosimeter Haake Rotovisco SV 20, und einer Hydroxylzahl von 56 mgKOH/g, was der theoretischen Hydroxylzahl entspricht.

### Beispiel 3

In der in Beispiel 1 beschriebenen Apparatur wurden 600 g eines Polyoxypropylenglykols mit der Hydroxylzahl von 56 mgKOH/g vorgelegt und wie in Beispiel 1 beschrieben mit 101 g Hexamethylendiisocyanat umgesetzt.

Der NCO-Gehalt der Mischung betrug nach der Umsetzung 3,48 %, was einer vollständigen Abreaktion der Hydroxylgruppen entspricht.

Diese Reaktionsmischung wurde wie in Beispiel 1 beschrieben mit 127,2 g Diethylenglykol umgesetzt. Nach dem Abkühlen der Reaktionsmischung erhielt man ein Polyol mit einer Viskosität von 3128 mPas bei 45°C, gemessen mit einem Viskosimeter Haake Rotovisco SV 20, und einer Hydroxylzahl von 128 mgKOH/g, was der theoretischen Hydroxylzahl entspricht.

### Beispiel 4

Es wurden wie in Beispiel 3 beschrieben 701 g eines Umsetzungsproduktes aus dem Polyoxypropylenglykol und Hexamethylendiisocyanat hergestellt und anschließend wie in Beispiel 1 beschrieben mit 125 g Neopentylglykol umgesetzt.

Nach dem Abkühlen der Reaktionsmischung erhielt man ein Polyol mit einer Viskosität von 5800 mPas bei 45°C, gemessen mit einem Viskosimeter Haake Rotovisco SV 20, und einer Hydroxylzahl von 120 mgKOH/g, was der theoretischen Hydroxylzahl entspricht.

### Herstellung der Polyurethanschaumstoffe

### Beispiel 5

In einem 5-1 Vierhalskolben wurden 69,3 g Diethylenglykolbischlorformiat vorgelegt und 400 g eines Polypropylenglykols mit der Hydroxylzahl 56,1 mgKOH/g zugegeben. Unter Rühren und Spülen mit Stickstoff wurde das Gemisch auf 50°C erwärmt. Der Beginn der Reaktion war an der Bildung von Chlorwasserstoff zu erkennen. Das Reaktionsgemisch wurde 12 Stunden bei 50°C gehalten. Anschließend wurde es auf Raumtemperatur abgekühlt und mit 1-normaler wäßriger Natronlauge neutralisiert. Nach Abtrennung der Wasserphase wurde das entstandene Polyol 4 mal mit Wasser gewaschen und anschließend getrocknet. Das so erhaltene Diol hatte eine Hydroxylzahl von 53 mgKOH/g und einen Wassergehalt von kleiner 0,03 Gew.-%.

### Beispiel 6

Es wurde eine Polyolkomponente aus folgenden Bestandteilen hergestellt:
- 95,3 Gew.-Teile: Polyol gemäß Beispiel 1
- 4,9 Gew.-Teile: Butandiol-1,4
- 0,4 Gew.-Teile: Wasser
- 0,3 Gew.-Teile: Triethylendiamin
- 0,003 Gew.-Teile: Dibutylzinndilaurat

### Herstellung der Isocyanatkomponente

54 Gew.-Teile 4,4' Diphenylmethandiisocyanat (MDI) wurden bei 60°C aufgeschmolzen und dazu 45 Gew.-Teile eines Polyoxypropylenglykols der Hydroxylzahl 56 mgKOH/g und 1 Gew.-Teil Dipropylenglykol gegeben. Die Mischung wurde unter Rühren 2 Stunden auf 80°C erwärmt. Das erhaltene Prepolymere hatte einen NCO-Gehalt von 15,4 % und eine Viskosität bei 25°C, gemessen mit einem Viskosimeter Haake Rotovisco SV 20, von 834 mPas.

### Herstellung des Formschaums

100 Gew.-Teile der Polyolkomponente und 97 Gew.-Teile der Isocyanatkomponente wurden intensiv miteinander gemischt, in eine auf 50°C geheizte, geschlossene Aluminiumform mit den Maßen 20x20x1 cm gegossen und dort auf schäumen gelassen. Es entstand ein Integralschaum mit einer integralen Dichte von 500 g/l, störungsfreier Oberfläche und folgenden mechanischen Werten:
- Härte:: 61 Shore A
- Zugfestigkeit:: 5,0 N/mm
- Reißdehnung:: 440 %
- Weiterreißfestigkeit:: 7,3 N/mm
- Rückprallelastizität:: 35 %
- Dauerbiegung:: > 100 000 Biegungen ohne Bruch

### Beispiel 7

Es wurde eine Polyolkomponente aus folgenden Bestandteilen hergestellt:
- 92,2 Gew.-Teile: Polyol gemäß Beispiel 2
- 6,7 Gew.-Teile: Butandiol-1,4
- 0,4 Gew.-Teile: Wasser
- 0,4 Gew.-Teile: Triethylendiamin
- 0,4 Gew.-Teile: Dibutylzinndilaurat

Als Isocyanatkomponente wurde das in Beispiel 5 beschriebene Prepolymer verwendet.

### Herstellung des Formschaums

100 Gew.-Teile der Polyolkomponente und 77 Gew.-Teile der Isocyanatkomponente wurden intensiv miteinander gemischt, in die in Beispiel 5 beschriebene Aluminiumform gegossen und dort aufschäumen gelassen. Es entstand ein Integralschaum mit einer integralen Dichte von 500 g/l, störungsfreier Oberfläche und folgenden mechanischen Werten:
- Härte:: 45 Shore A
- Zugfestigkeit:: 4,0 N/mm
- Reißdebnung:: 450 %
- Weiterreißfestigkeit:: 5,0 N/mm
- Rückprallelastizität:: 35 %
- Dauerbiegung:: > 100 000 Biegungen ohne Bruch

### Beispiel 8

Es wurde eine Polyolkomponente aus folgenden Bestandteilen hergestellt:
- 83,3 Gew.-Teile: Polyol gemäß Beispiel 1
- 14,2 Gew.-Teile: Butandiol-1,4
- 1,0 Gew.-Teile: Wasser
- 0,6 Gew.-Teile: Triethylendiamin
- 0,1 Gew.-Teile: Dibutylzinndilaurat
- 0,3 Gew.-Teile: Schaumstabilisator DC 193 von Dow- Corning

### Herstellung der Isocyanatkomponente

45 Gew.-Teile 4,4, Diphenylmethandiisocyanat (MDI) wurden bei 60°C aufgeschmolzen und dazu eine Mischung aus 50 Gew.-Teile eines Polyoxypropylenglykols der Hydroxylzahl 56 mgKOH/g und 5 Gew.-Teilen eines mit Glyzerin gestarteten Polyoxypropylenpolyols der Hydroxylzahl 400 mgKOH/g gegeben. Die Mischung wurde unter Rühren 2 Stunden auf 80°C erwärmt. Das erhaltene Prepolymere hatte einen NCO-Gehalt von 11,2% und eine Viskosität bei 25°C (bestimmt mit einem Viskosimeter Haake Rotovisco SV 20) von 4893 mPas.

### Herstellung des Formschaums

100 Gew.-Teile der Polyolkomponente und 203 Gew.-Teile der Isocyanatkomponente wurden intensiv miteinander gemischt, in die in Beispiel 5 beschriebene Aluminiumform gegossen und dort aufschäumen gelassen. Es entstand ein Integralschaum mit einer integralen Dichte von 500 g/l, störungsfreier Oberfläche und folgenden mechanischen Werten:
- Härte:: 53 Shore A
- Zugfestigkeit:: 4,7 N/mm
- Reißdehnung:: 470 %
- Weiterreißfestigkeit:: 5,93 N/mm
- Rückprallelastizität:: 34 %
- Dauerbiegung:: > 100 000 Biegungen ohne Bruch

### Beispiel 9

Es wurde eine Polyolkomponente aus folgenden Bestandteilen hergestellt:
- 90,5 Gew.-Teile: Polyol gemäß Beispiel 5
- 8,25 Gew.-Teile: Butandiol-1,4
- 0,5 Gew.-Teile: Wasser
- 0,75 Gew.-Teile: Triethylendiamin
- 0,04 Gew.-Teile: Dibutylzinndilaurat

### Herstellung der Isocyanatkomponente

78 Gew.-Teile 4,4' Diphenylmethandiisocyanat (MDI) wurden bei 60°C aufgeschmolzen und dazu 15 Gew.-Teile eines Polyoxypropylenglykols der Hydroxylzahl 112 mgKOH/g und 7 Gew.-Teile Dipropylenglykol gegeben. Die Mischung wurde unter Rühren 2 Stunden auf 80°C erwärmt. Das erhaltene Prepolymere hatte einen NCO-Gehalt von 20,2 % und eine Viskosität bei 25°C von 1131 mPas, bestimmt mit einem Viskosimeter Haake Rotovisco SV 20.

### Schaumherstellung

100 g der Polyolkomponente und 64 g der Isocyanatkomponente wurden intensiv miteinander vermischt und in einem Pappbecher aufschäumen gelassen. Es entstand ein weicher, elastischer Schaum mit einer Dichte von 230 g/l. die Startzeit des Schaums betrug 20 sec., die Steigzeit betrug 40 sec..

Der Schaum wies folgende mechanischen Eigenschaften auf:
- Härte:: 64 Shore A
- Zugfestigkeit:: 5,2 N/mm
- Reißdehnung:: 350 %
- Weiterreißfestigkeit:: 4,5 N/mm
- Rückprallelastizität:: 25 %

## Patentansprüche

1. Verfahren zur Herstellung von kompakten oder zelligen Polyurethanen durch Umsetzung von
a) mindestens einer Verbindung mit mindestens zwei aktiven Wasserstoffatomen mit
b) mindestens einem Polyisocyanat,
in Anwesenheit von
c) Katalysatoren und gegebenenfalls
d) Treibmitteln sowie
e) Hilfs- und/oder Zusatzstoffen,
dadurch gekennzeichnet, daß als Komponente a) mindestens ein Polyoxypropylen-Polyol eingesetzt wird, dessen sekundäre Hydroxylgruppen über ein Bindeglied der allgemeinen Formel X₁-R-X₂, wobei X₁ und X₂ gleich oder verschieden und mit Hydroxylgruppen reaktive funktionelle Gruppen sind und R ein beliebiger aliphatischer, cycloaliphatischer oder aromatischer Rest ist, mit Diolen, die nur primäre Hydroxylgruppen aufweisen, verbunden sind.

2. Verfahren nach Anspruch 1, dadurch gekennzeichnet, daß die Gruppen X₁ und X₂ Carbonsäuregruppen, substituierte Carbonsäuregruppen, Isocyanatgruppen oder Silangruppen sind.

3. Verfahren nach Anspruch 1, dadurch gekennzeichnet, daß Gruppen X₁ und X₂ Isocyanatgruppen sind.

4. Verfahren nach Anspruch 1, dadurch gekennzeichnet, daß Gruppen X₁ und X₂ Carbonsäurechloridgruppen sind.

5. Verfahren nach Anspruch 1, dadurch gekennzeichnet, daß die Polyoxypropylen-Polyole, deren sekundäre Hydroxylgruppen über ein Bindeglied der allgemeinen Formel X₁-R-X₂ mit Diolen, die nur primäre Hydroxylgruppen aufweisen, verbunden sind, in einer Menge von 50 bis 100 Gew.-%, bezogen auf das Gewicht der Komponente a), eingesetzt werden.

6. Verwendung von Polyoxypropylen-Polyolen, deren sekundäre Hydroxylgruppen über ein Bindeglied der allgemeinen Formel X₁-R-X₂ mit Diolen, die nur primäre Hydroxylgruppen aufweisen, verbunden sind, zur Herstellung von Polyurethanen.

7. Verwendung von Polyoxypropylen-Polyolen, deren sekundäre Hydroxylgruppen über ein Bindeglied der allgemeinen Formel X₁-R-X₂ mit Diolen, die nur primäre Hydroxylgruppen aufweisen, verbunden sind, zur Herstellung von Polyurethanschaumstoffen mit kompakter Außenhaut und zelligem Kern.

8. Polyurethane, hergestellt nach dem Verfahren gemäß Anspruch 1.
